# EUROPEAN PATENT SPECIFICATION

(11) **EP 3 600 797 B1**
(45) Date of publication and mention of the grant of the patent: **15.12.2021**
(21) Application number: 18720799.8
(22) Date of filing: 22.03.2018
(51) Int. Cl.: B25J 15/00

(54) **HANDLING APPARATUS FOR PRODUCTS AND METHOD FOR AUTOMATIC ADJUSTMENT OF THE SAME APPARATUS**
HANDHABUNGSVORRICHTUNG FÜR PRODUKTE UND VERFAHREN ZUR AUTOMATISCHEN EINSTELLUNG DERSELBEN VORRICHTUNG
APPAREIL DE MANIPULATION DE PRODUITS ET PROCÉDÉ DE RÉGLAGE AUTOMATIQUE DUDIT APPAREIL

(30) Priority: 22.03.2017 IT 201700031823
(43) Date of publication of application: 05.02.2020
(73) Proprietor: Schnell S.p.A., 61036 Colli al Metauro (PU) (IT)
(72) Inventor: CESARI, Marco, 61036 Colli Al Metauro (PU) (IT)
(74) Representative: Manzella & Associati
(86) International application number: PCT/IT2018/050049
(87) International publication number: WO 2018/173089

(56) References cited:
- WO-A1-2014/143436
- DE-A1-102007 039 384
- US-A1- 2012 279 602
- US-A1- 2012 280 527
- US-A1- 2016 339 590

## Description

### Technical field

The present invention relates to a handling apparatus for products, in particular metal stirrups and similar products, as well as a method for automatically adjusting the same apparatus.

### Background art

Apparatuses able to handle automatically products of different types are known. Such apparatuses may comprise a manipulator assembly, for example an anthropomorphic arm, bearing one or more gripping means, suitable for picking up a product from a first station, transferring it, possibly orientating it, and releasing it in a second station.

More specifically, in the technical sector of the processing of metal bars or sections for reinforcing reinforced concrete, it is known the use of handling apparatuses provided with an anthropomorphic robotic arm, suitable to grab products during processing or already made, move them and release them in an unloading station, wherein, for example in the case of stirrups machines, they are stacked on top of each other.

For example, patent application WO 96/28271 illustrates a gripping device provided with jaws or gripping fingers for handling products in the form of rods or bars. The gripping device is arranged at the end of a robotic arm, partially rotatable about a gripping axis parallel to the longitudinal direction of the fingers and rotatable relative to the robotic arm about a hinging axis parallel to the gripping axis. The gripping device can be displaced between a fixed position and the hinging axis, and is connected to a control device, for example a pneumatic cylinder, suitable to stress the gripping device with a force in the opposite direction with respect to the hinging axis and to the fixed position. The gripping device can thus collapse, in a resilient way and without substantial resistance, to limited, forced movements exerted on the gripping means by an article gripped by the jaws, in particular a rotation about the hinging axis, a rotation around the gripping axis and a displacement against the hinging axis.

To cite further examples, patent application DE 102007039384 illustrates a handling apparatus and a method for modifying the positioning of the joints of the apparatus. Patent application US 2016/339590 describes a robotic system provided with an actuator reconfigurable assembly. The international application WO 2014/143436 illustrates an apparatus and a method for the automatic conversion of the pitch of pickup heads. Patent application US 2012/280527 illustrates a reconfigurable actuator applicable to a robotic arm. Finally, patent application US 2012/279602 discloses a supply system for a module of a reconfigurable actuator applicable to a robotic arm.

It is very important in the handling apparatus for products to ensure a stable and safe grip of the products, when picking up the products and while moving them. In particular, during the movement, the product is subjected to dynamic actions, which can cause unacceptable deformations.

Furthermore, in the specific sector of metal section machining, in particular in the production of stirrups, the need is felt to change frequently and quickly the production cycle, hence the geometry of the workpieces. This entails the need to adapt frequently both the setting of the apparatuses responsible for processing, and the setting up of the handling apparatus and, in particular, the arrangement of the involved gripping means.

While the setting of the processing apparatus usually takes place automatically, and therefore very quickly, on the other hand the handling apparatuses of the known type require considerable time to carry out the necessary adjustments.

In particular, during the change step of the production cycle, it is necessary to modify the relative positioning of the gripping means, with jaws or the like, so as to ensure correct handling of the pieces to be grabbed.

Currently, the adjustment of the gripping means of the handling apparatuses is carried out manually, therefore while the apparatus is stationary. Therefore, this practice, besides not guaranteeing optimal precision, influences negatively the production yields, slowing down considerably the production cycle.

### Presentation of the invention

The object of the present invention is to solve the aforementioned drawbacks, by devising a handling apparatus for products and a method for the automatic adjustment of the same apparatus, allowing to optimally handle the products, as well as to optimally adjust the means involved in the step of handling.

Another object of the present invention is to provide a handling apparatus for products of simple constructional and functional conception, provided with safe and reliable use, as well as a relatively economical cost.

The aforementioned objects are achieved, according to the present invention, by the handling apparatus for products according to claim 1, by the method for automatically adjusting the same apparatus according to claim 16, as well as by the method for the automatic handling of products according to claim 17.

The handling apparatus according to the invention comprises a robotic arm being mobile in a controlled manner to transfer at least one product at a time from a first operating station to a second operating station.

The robotic arm is preferably operated upon command of a control unit.

The robotic arm, in particular, is provided with a gripping assembly comprising a support frame and at least one gripping device, for example of the gripper type, provided by the aforementioned support frame and suitable for gripping and holding the aforementioned product in correspondence of a respective portion.

The support frame comprises at least one adjustment guide, along which the gripping device can be moved when the gripping device is arranged in an unlocked condition, and lockable when the gripping device is arranged in a locked condition.

The apparatus can be associated with an adjustment station, provided with a retaining assembly comprising at least one reference member, suitable to intercept the aforementioned gripping device, thus enabling, through the controlled actuation of the aforementioned robotic arm, the relative displacement of the gripping device with respect to the aforementioned adjustment guide, when said device is in the aforementioned unlocking condition.

The reference member advantageously comprises a receiving seat for the gripping device, shaped like a fork, able to receive the same device between opposing walls, blocking it for carrying out the aforementioned adjustment operations.

A sensor element is preferably applied in correspondence of said shaped receiving seat to detect a measurement of the distance of the gripping device.

In the unlocking condition, it is thus possible to operate the positioning of the gripping device in correspondence of a selected position with respect to the aforementioned support structure, and the locking in the aforementioned selected position, by placing the gripping device in the aforementioned locking condition.

Thanks, in particular, to the movement ability of the same robotic arm, according to the invention, it is possible to completely realize any adjustment operation of the gripping assembly.

More precisely, it is possible to adjust automatically, thanks to the cooperation between the robotic arm and the adjustment station, the positioning of the at least one gripping device of the aforementioned gripping assembly.

This is essentially due to the fact that the connection between the gripping device and the support frame of the gripping assembly can be removed and activated automatically, thus making it possible the relative displacement, along the aforementioned adjustment guides, of the device itself.

More precisely, the gripping assembly comprises means for locking the at least one gripping device, which can be activated and deactivated automatically, for locking and unlocking the same device along the adjustment guide, respectively.

It is possible to activate the locking means preferably by means of an associated control unit, for example integrated into the apparatus for controlling the robotic arm.

Moreover, thanks to the provision of the retaining assembly of the adjustment station, it is possible to keep the gripping device fixed, while the adjustment guides are being displaced in a controlled manner together with the robotic arm, thus realizing a relative motion between the gripping device the guides themselves, which realizes the desired adjustment of the gripping device with respect to the support structure of the gripping assembly. In essence, this adjustment is advantageously carried out by exploiting the ability to move and control the robotic arm itself, without requiring dedicated actuator and control members, which would weigh down the apparatus.

The adjustment station is preferably fixed with respect to the robotic arm bearing the support frame, and arranged in a position preferably within the range of the robotic arm itself, so as to allow the quick and effective execution of the adjustment operations.

The gripping device may comprise locking means which can be activated and deactivated automatically, connecting means to the support structure, of any type, preferably of the mechanical, or magnetic, or fluid-dynamic type.

The locking means can be activated and deactivated by the corresponding actuation of an actuator member, for example a pneumatic actuator member.

The actuator element can be associated with the locking means, preferably carried by the same gripping device.

Alternatively, the actuator member can be applied to the adjustment station, to act on the gripping device, when it is intercepted by the aforementioned retaining assembly. In this case, the gripping assembly is advantageously lightened.

Preferably, the locking means allow a discrete adjustment, in correspondence of predetermined positions, along the aforementioned adjustment guide, to ensure a secure and steady locking.

The locking means comprise at least one connecting element, which can be activated preferably by actuation of the aforementioned pneumatic actuator member, in the respective adjustment guide of the support structure, to lock the gripping device accordingly.

The locking means may comprise one or more, for example a pair, of pluggable connecting elements, for each gripping device.

Each of the aforementioned pluggable connecting element preferably comprises a pluggable element or pin.

Preferably, the connecting element can be plugged into a suitably shaped seat, to allow a safe and precise coupling. Preferably this coupling is conical.

Alternatively, the locking means can operate, instead of by being plugged in the respective seats, by friction acting on the adjustment guide, and the displaceable gripping device can slide continuously along the adjustment guide.

The gripping assembly may comprise one or more further gripping devices, which can be positioned or fixed with respect to the support frame.

The gripping assembly preferably comprises the minimum number of gripping devices which allows a safe and stable grip of the products to be handled, so as to contain the weight and cost of the apparatus, considering, in this specific case, to possibly provide a hyperstatic type of grip, if the products to be handled tend to easily deform .

The gripping assembly preferably comprises a pair of gripping devices, each being preferably movable along a respective adjustment guide.

The apparatus may comprise a pair of adjustment guides arranged inclined on a plane defined by the support structure.

In particular, in the case where the apparatus is intended for handling products of the type of metal stirrups, the adjustment guides are arranged preferably perpendicular.

Advantageously, the support structure of the gripping assembly further comprises an abutment member, which is adapted to lock a respective portion of the product being held by the gripping device, so as to guarantee a stable grip during movement and / or the pickup of the product.

Conveniently, the abutment member comprises an operative surface against which the aforementioned portion of the product is locked, to keep, in particular during movement, the same product in a desired configuration and / or to limit, or to avoid, possible deformations due to the action of gravity.

The abutment member is arranged preferably in correspondence of the intersection between the adjustment guides, if provided and if arranged incident.

The abutment member can act as a simple support or comprise a magnetic or magnetizable body, for example made by an electromagnet, so as to cooperate, by means of a magnetic action, with the at least one gripping device to hold the product firmly during the movement.

The abutment member can be usefully associated to an auxiliary gripping device cooperating with it, to retain a respective portion of a product, arranged in correspondence of an operating surface of the abutment member itself.

The aforementioned auxiliary gripping device can be actuated alternately between an active configuration, retaining the aforementioned portion of product, and an inactive configuration of rest with respect to the retaining action.

Preferably the auxiliary gripping device is of the jaw type. A first jaw and a second jaw, cooperating, are preferably arranged on opposite sides to the operating surface of the abutment member.

Said jaws can alternatively be oscillated between an open active configuration, retaining, and an inactive closed configuration, of rest.

Said jaws can be oscillated preferably with respect to an axis which is parallel to the plane of the operating surface of the abutment element, arranged between the operating surface itself and the support structure of the gripping assembly.

The aforementioned operating surface of the abutment element may comprise notches on opposite sides, to allow the passage of the aforementioned jaws shaping the auxiliary gripping device, from the inactive configuration, of rest, to the active configuration, retaining the portion of the product intercepted in correspondence of the operating surface.

Alternatively or additionally, the gripping assembly may comprise one or more further gripping devices, fixed to the support structure, suitable for gripping the product in correspondence of respective portions, for example in correspondence of an angular portion in case of stirrups or of a distal portion, for example in the case of shaped pieces of elongated shape.

### Brief Description of the Drawings

The details of the invention will become more evident from the detailed description of a preferred embodiment of the handling apparatus for products, as well as a method for the automatic adjustment of the same apparatus, illustrated by way of example in the accompanying drawings, wherein:
Figures 1 to 4 show a perspective view of a handling apparatus for products according to the present Invention, in different operating steps;
Figures 5 and 6 show a plan view of a gripping assembly used in the apparatus according to the invention, in respective adjustment conditions;
Figure 7 shows a side view of the same assembly;
Figures 8, 9 and 10 show respectively a perspective view of the same gripping assembly, from different angles;
Figures 11a, 11b respectively show a sectional view according to a median transverse plane and a perspective view, with the protective casing shown in transparency, of a portion of the gripping assembly used in the apparatus according to the invention;
Figures 12a, 12b show respectively the same views shown in Figures 11a, 11b, in a different operating phase;
Figure 13 shows a perspective view of said gripping assembly according to a different embodiment;
Figures 14 and 15 show a side view of the gripping assembly illustrated in Figure 13 under different operating conditions;
Figure 16 shows a front view of a particular adjustment station associated with the apparatus according to the invention.

### Embodiments of the invention

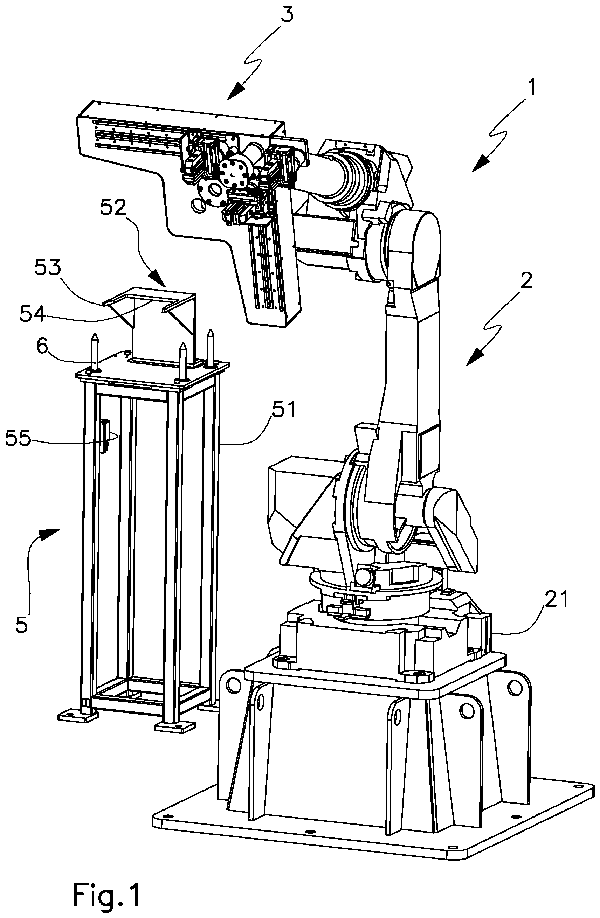

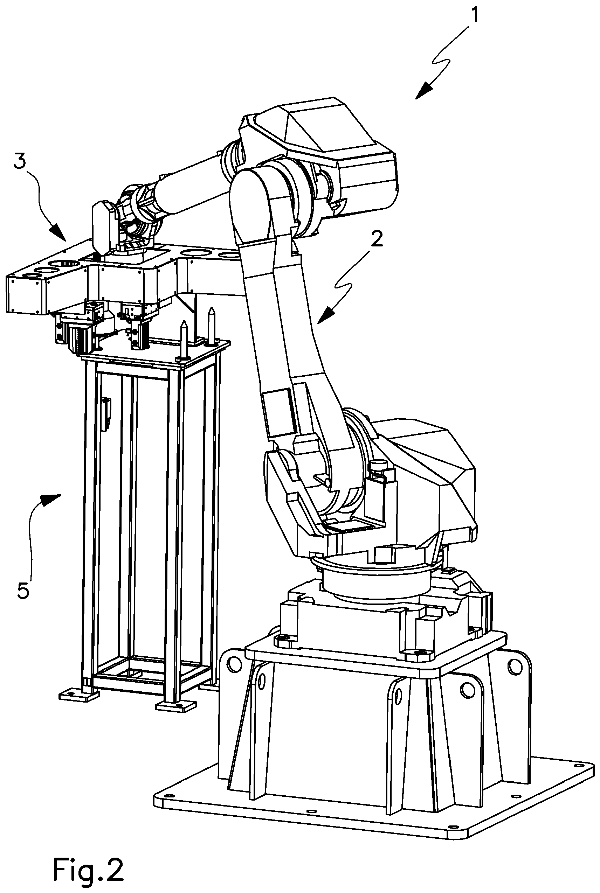

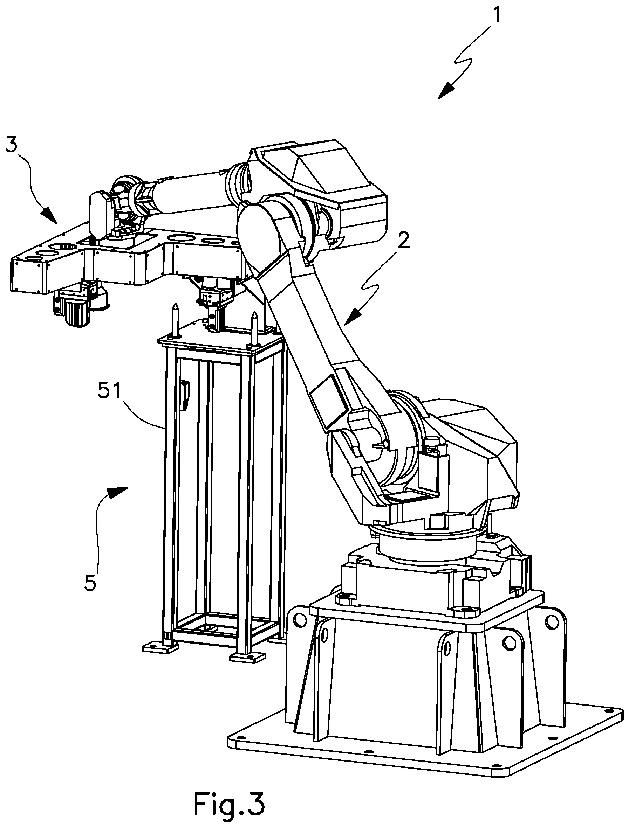

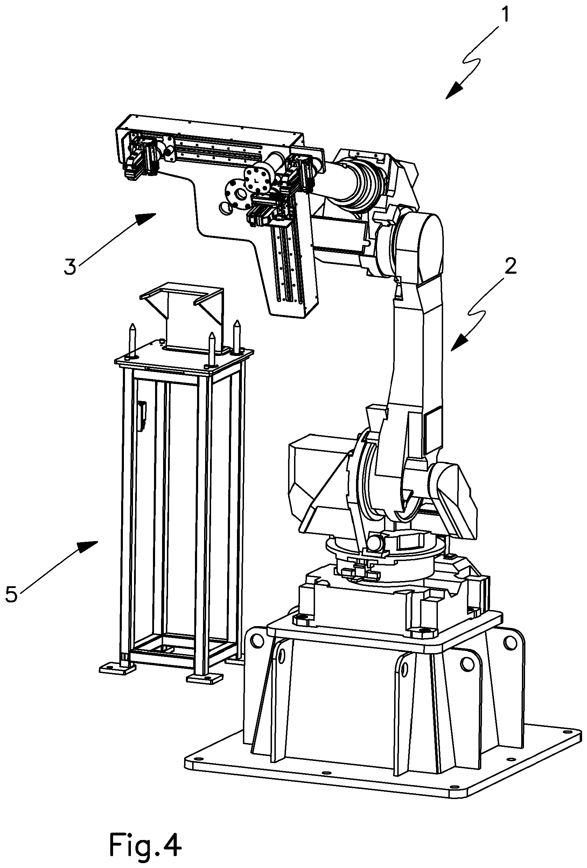

With particular reference to Figures 1 to 4, 1 globally refers the handling apparatus for products, in particular for products of the type of metal stirrups.

The handling apparatus according to the invention may be equally used for handling products of different shapes and types, in any case intended to be gripped by gripping devices, to be picked up from a first operating station and transferred to a second operating station.

The apparatus 1 comprises a robotic arm 2, fixed to a respective support base 21, and bearing a gripping assembly 3 for handling the products.

The robotic arm 2 is movable, in a known manner, upon command of a control unit and upon actuation of suitable actuator members, not shown for simplicity, to bring, for example, the gripping assembly 3 in correspondence of a pickup station for the products to be handled, to pick up at least one product and transfer it to a release station.

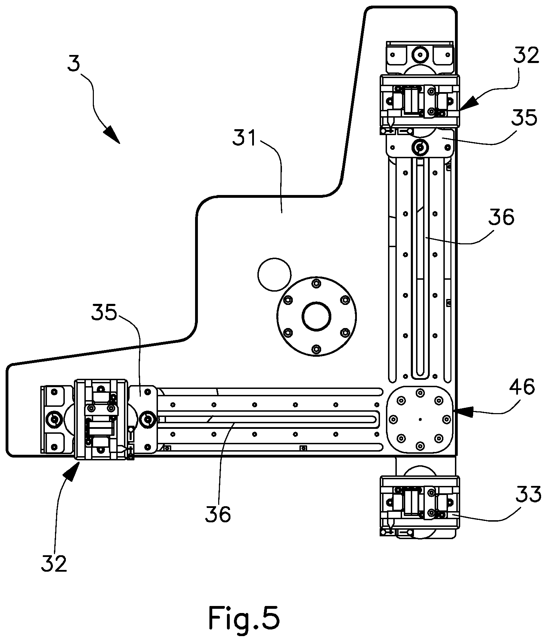

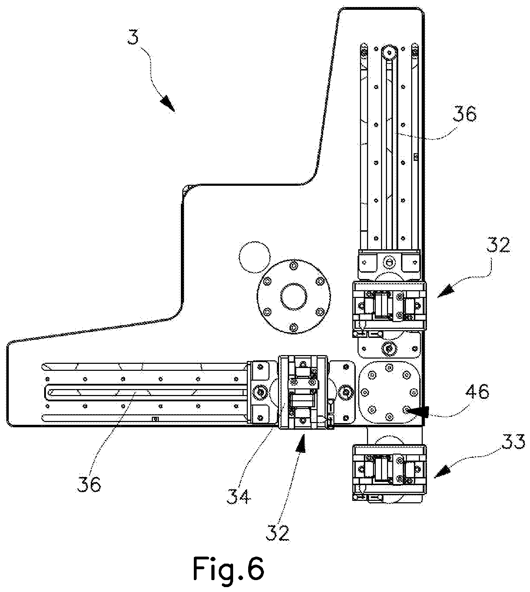

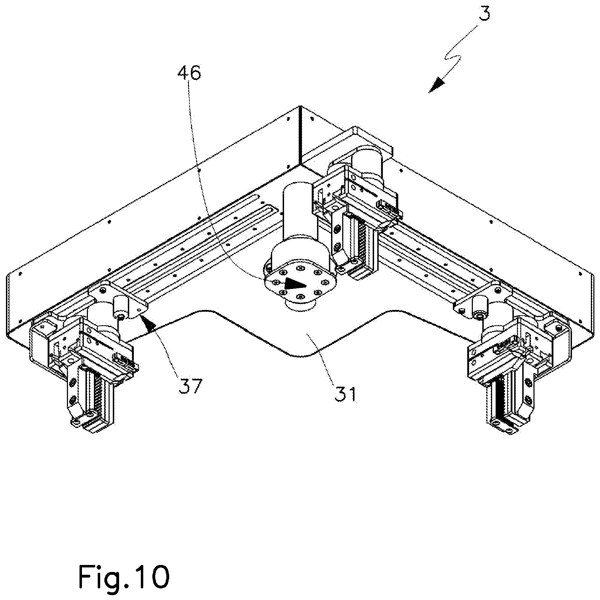

The gripping assembly 3 comprises a support structure 31, for example of a box-like shape, containing at least one support device 32 which can be positioned selectively with respect to the support structure 31 itself. In the illustrated embodiment, in particular, in Figures 5 to 10, the support structure 31 of the gripping assembly 3 has a pair of movable gripping devices 32.

The support structure 31 can also bear at least one further gripping device 33 arranged in a fixed manner with respect to the structure itself (see Figure 5).

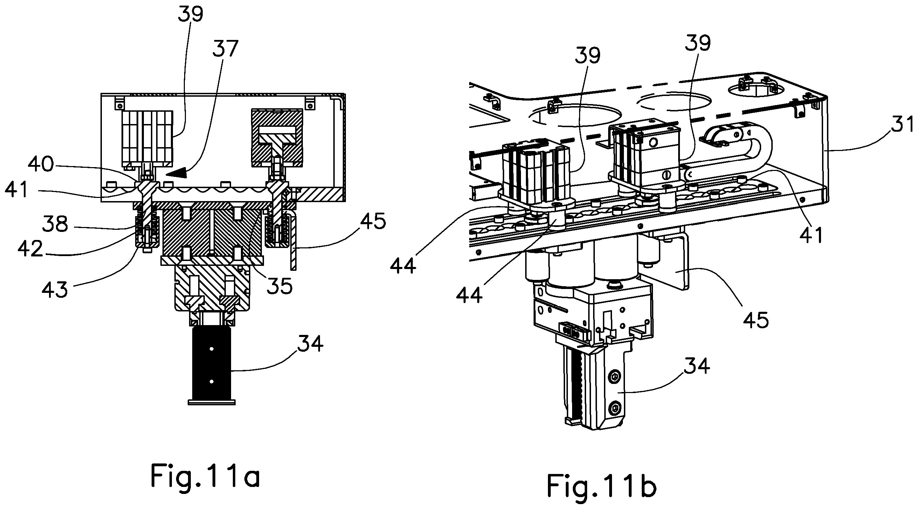

Each gripping device 32, like the further fixed gripping device 33, preferably comprises, but without limitations, a gripping element 34 of the gripper type suitable to grab or retain and to release a portion of the product to be handled (see in particular Figures 11a, 11b). More precisely, each movable gripping device 32 comprises a frame 35 on which the operating gripping element 34 is fixed.

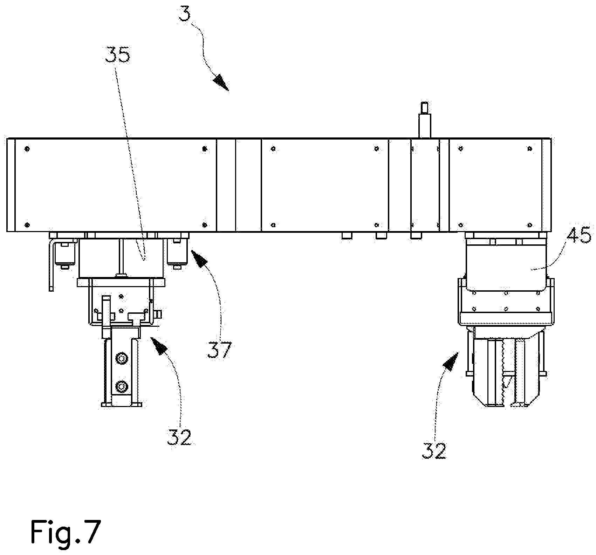

The position of each gripping device 32 is therefore automatically adjustable, on command of appropriate actuator means, on the support structure 31, so as to be adapted rapidly to the shape and size of the products to be handled each time (see in particular Figure 7).

More precisely, the support structure 31 comprises at least one adjustment guide 36, along which the at least one gripping device 32 is mounted movable and lockable. According to the embodiment, illustrated by way of example in Figures 5 to 10, the support structure 31 comprises a pair of adjustment guides 36, on each of which a respective gripping device 32 is movable, in particular sliding.

Moreover, again by way of example, it is possible to provide that the fixed gripping device 33 is aligned with one of the adjustment guides 36 provided, for example, to cooperate with the respective gripping device 32 which can be moved during handling of the elongated pieces, which are oriented in the direction of the same adjustment guide 36.

Each adjustment guide 36 forms preferably a slot, along which the respective gripping device 32 is movable, for example sliding. Each adjustment guide 36 is preferably made of a suitable wear-resistant material, for example steel.

Each gripping device 32 is alternately placed in a movable condition, for the correct positioning along the adjustment guide 36, and in a locked condition, thanks to the provision of suitable locking means 37.

In the aforementioned mobile condition, the locking means 37 are deactivated, to allow the gripping device 32 to move along the adjustment guide 36, whereas in the locked condition, the locking means 37 lock the gripping device 32 in a selected position along the adjustment guide 36.

Preferably, the locking means 37 are carried by the gripping device 32, in particular fixed to the frame 35, and are used for locking or, alternatively, for unlocking the respective gripping device 32 along the respective adjustment guide 36.

The locking means 37 can preferably comprise at least one connecting element 38, preferably a pair of connecting elements 38, which can be actuated between an active locking configuration, i.e. connecting the adjustment guide 36, and an unlocking configuration, in correspondence of which each provided connecting element 38 is disconnected from the same adjustment guide 36, allowing the respective gripping device 32 to move along the same adjustment guide 36.

Preferably, the connecting element 38 can be a pluggable element or, alternatively, connectable in another way, for example by screwing or by friction to the adjustment guide 36.

Each connecting element 38 can be actuated by an actuator member 39, preferably of the pneumatic type or, alternatively, of a different type, provided that it is suitable for this purpose.

The connecting element 38 can, for example, be made by means of an inserted pin, sliding transversely to the adjustment guide 36. The aforementioned pin preferably comprises a coupling head 40, for example of a flared shape, adapted to be housed in respective seats 41, of a mated shape, obtained in succession along the adjustment guide 36.

Contrasting means 42, for example of the elastic type, can act on the connecting element 38 to contrast the connection or disconnection from the adjustment guide 36.

In the illustrated case, the contrast means 2 are suitable to contrast the disengagement of the connecting element 38 itself from the housing seat 41 selected each time.

For example, in the embodiment illustrated by way of non-limiting example, said contrast means 42 are made by means of a helical spring inserted axially inside a cup 43, to which, in correspondence of an opposite end to said engagement head 40, the connecting element 38 is constrained. Said helical spring is interposed between the bottom of the cup 43 and the support frame 35 of the movable gripping element 32.

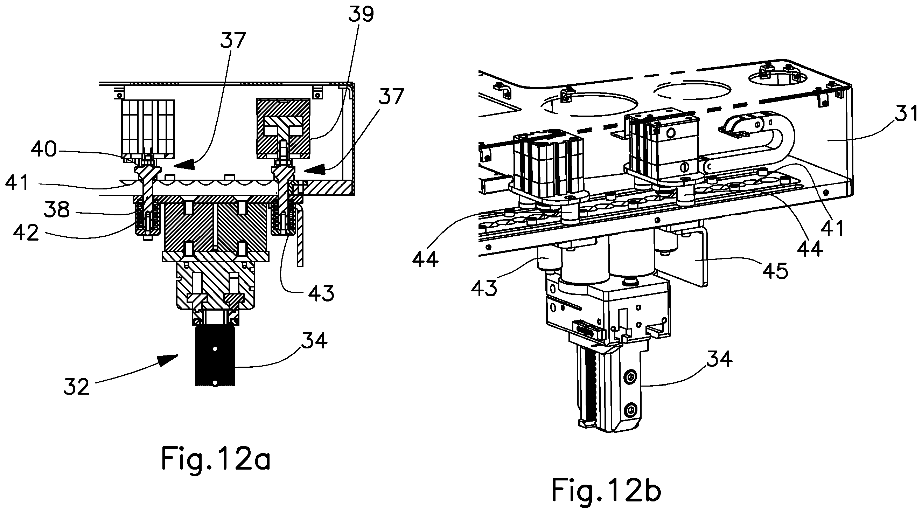

The coupling head 40, which projects from the opposite side of the adjustment guide 36, is in turn constrained to the actuator member 39, so as to be alternately extracted and inserted, on the contrast of said helical spring, into the seat 41, each time selected, of the adjustment guide 36 (see, in particular, Figures 11a and 12a).

In this extraction and insertion motion, the cup 43 can further act as an abutment against the frame 35 of the gripping device 32.

Preferably, the actuator member 39 is arranged inside the support structure 31, preferably inside a respective protective casing, while the gripping element 34 projects outwardly from the same structure 31, on the opposite side with respect to the interposed adjustment guide 36.

The gripping device 32 can therefore comprise connecting elements 44 for connecting the actuator members 39 to the frame 35 bearing the gripping element 34 (see for example Figures 11b, 12b). These connecting elements 44 can be fastening elements of the known type.

The gripping device 32 can also comprise a detecting body 45, carried by the frame 35, suitable for being detected by detection means, as better described below.

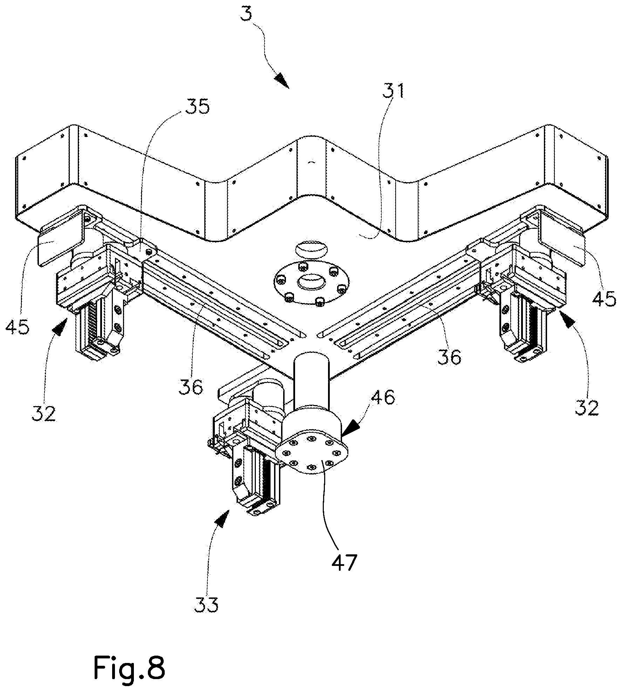

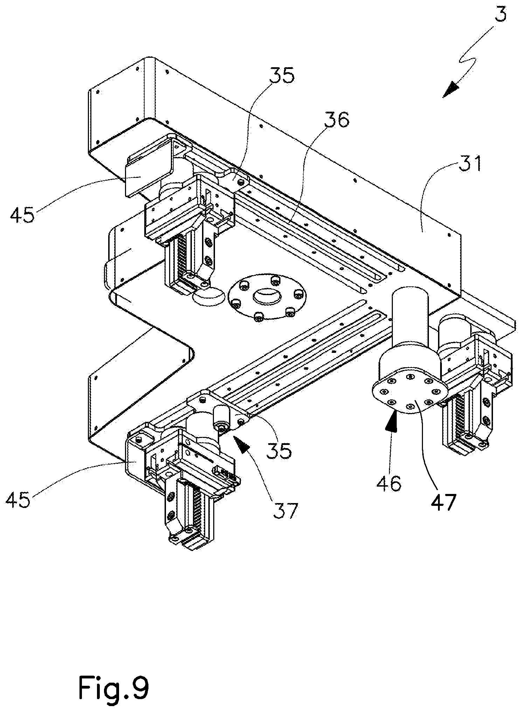

The support structure 31 can also bear an abutment member 46, particularly advantageous when the apparatus 1 is used for the handling of metal stirrups (see Figures 8 and 9).

The abutment member 46 may, for example, perform the function of guaranteeing a certain configuration, for example planar, of the picked-up product. More precisely, the abutment member 46 is configured to contrast or limit the occurrence of undesired deformations of the product, for example due to the action of gravity acting on the product itself during handling.

The abutment member 46 has an operating surface 47 against which a portion of the product to be handled can abut during the step of picking up and / or handling.

It may also be useful, particularly for the handling of stirrups, that the adjustment guides 36 provided in pairs are arranged on the support structure 31 along mutually incident directions, for example arranged perpendicularly (see Figure 5), so as to allow the gripping elements 34 to grab respective portions of perpendicular arms of the same brackets. The abutment member 46 is then preferably arranged in correspondence of the vertex between the incident directions of the two respective adjustment guides 36, so as to retain a respective angular portion of the stirrup to be handled.

The abutment member 46 may comprise magnetic activation means, for example of electric type, so as to block pieces of metallic material in a bidirectional manner, by means of an abutment, on one side and on the other, by an attraction force acting in the surrounding space, thus cooperating to safely pick up the products to be handled arranged according to any spatial conformation.

Advantageously, the abutment member 46 can comprise an electromagnet, so as to allow the optimum control of the attraction action exerted by the same. In other words, this action of attraction can be adjusted or attenuated in a controlled manner, to avoid the interference with operating steps unrelated to the sole handling, when, for example, the gripping assembly 3 operates the deposit of the picked-up products or when it approaches the stirrup machine and to its elements, to operate the picking up of the products.

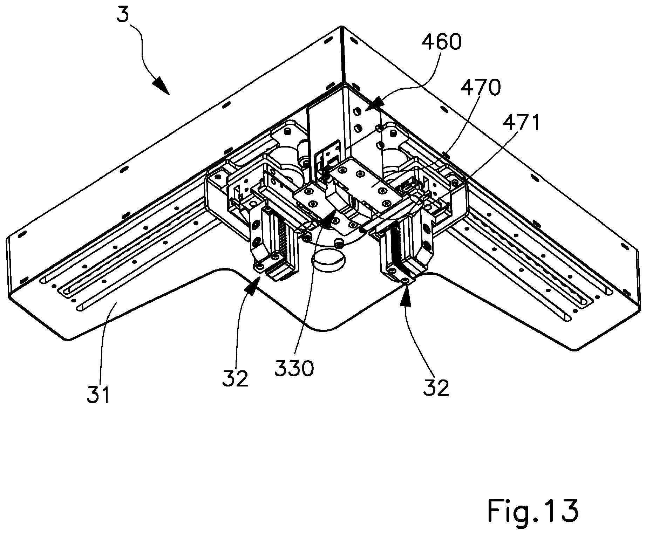

It is also possible to provide, according to a particular embodiment shown in Figures 13 to 15, that the abutment element 460 is associated with an auxiliary gripping device 330, preferably of the gripper type, to ensure an optimum grip of the product during the step of handling.

In particular, the auxiliary gripping device 330 can be activated alternately between an active configuration, retaining a portion of product, and an inactive configuration of rest with respect to the retaining actions. More precisely, in correspondence of said inactive configuration, the auxiliary gripping device 330 is not able of retaining an aforementioned portion which is in correspondence of the operating surface 470.

Said auxiliary gripping device 330 can comprise a first jaw 331 and a second jaw 332, arranged on opposite sides with respect to the operating surface 470 of the abutment element 460. The operating surface 470 in turn preferably comprises, in correspondence of the aforementioned opposite sides, respective notches 471, intended to allow the passage of the respective jaw 331, 332 when the auxiliary device 330 is brought from the inactive configuration to the active configuration. The notches 471, however, are preferably shaped so as not to jeopardize the support or abutment function exerted by the operating surface 470.

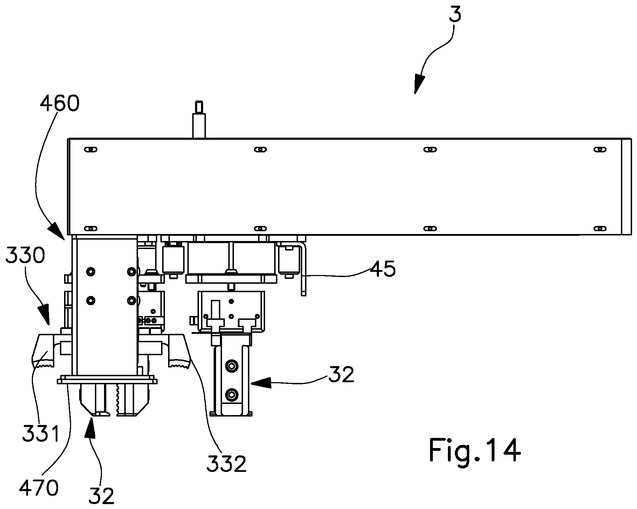

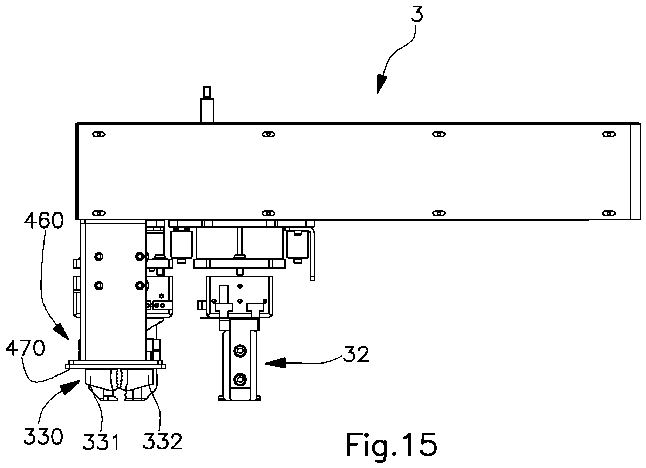

In practice, the auxiliary device 330 cooperating with the operating surface 470 of the abutment element 460 is in the aforementioned inactive configuration when the first jaw 331 and the second jaw 332 are mutually moved away in an opening configuration, in particular backward with respect to the operating surface 470, while it is in the aforementioned active configuration, when the first jaw 331 and the second jaw 332 are in a closed configuration, mutually approaching, so as to firmly retain a portion of product in correspondence of the operating surface 470 (see Figures 14 and 15).

The apparatus 1 can also be associated with an adjustment station 5 able to cooperate with the gripping assembly 3 to automatically operate the adjustment thereof.

The robotic arm 2 can in fact be actuated, upon command of the same control unit which controls the handling steps, to reach said adjustment station 5, and to cooperate with it for adjusting the positioning of the gripping elements 34 on the support structure 31, as better described below.

The adjustment station 5 comprises a support 51 and a retaining assembly 52 carried by the support 51.

The retaining assembly 52 comprises for example a reference member 53, preferably a fork bracket, suitable for receiving and intercepting a respective gripping element 34 between two opposing walls of said fork in a respective receiving seat 54, so as to block it, referring it securely to a fixed spatial reference system, represented by the same adjustment station 5.

In practice, the receiving seat 54 can have a shape such as to intercept and lock the gripping element 34, ensuring a correct insertion and therefore the certain reference with respect to said spatial reference system.

When the gripping element 34 of a movable gripping device 32 is brought to the adjustment station 5 following a corresponding approach motion, and locked in the receiving seat 34, it is possible, by unlocking the respective locking means 37 and thus placing the gripping device 32 in the movable condition, to operate the adjustment along the adjustment guide 36. Alternatively, it is possible to provide that the gripper assembly 3 comprises elements for consenting to the locking and unlocking of the movable gripping devices 32, or which comprises actuating elements suitable for locking and unlocking the same movable gripping devices 32.

It is also possible to provide that the actuator member 39 is applied to the adjustment station 5 in a fixed manner, rather than on the gripping device 32, so as to lighten the gripping assembly 3.

The adjustment is then carried out simply by operating, by means of the control unit of the robotic arm 2, the gripping assembly 3 in a controlled adjustment motion. If, for example, the adjustment guides 36 are substantially rectilinear, this motion is substantially translated.

In essence, the controlled adjustment motion takes place thanks to the relative motion between the adjustment guide 36 and the gripping device 32, when this is locked in the adjustment station 5 and made mobile along the adjustment guide 36 by the deactivation of the locking means 37.

The control station 5 can also comprise at least one sensing sensor element 55, for example of a laser type, suitable to detect the position of the aforementioned detecting body 45, for each gripping device 32. This detection can be useful, for example, to detect the initial positioning of the gripping devices 32, brought by the gripping assembly 3. For example, the initial reading can be performed by approaching, in a controlled manner and / or in a determined position, the robotic arm 2 to the sensor element 55 itself.

Alternatively, different detection means can be used, for example of an optical or mechanical type.

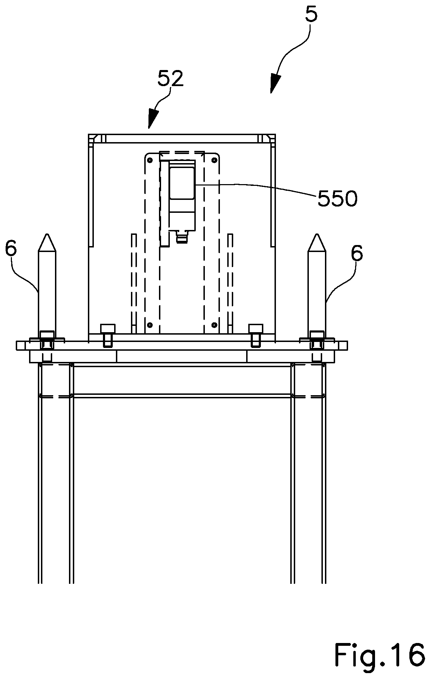

According to a particular embodiment shown in Figure 16, the adjustment station 5 comprises a sensor element 550 applied to the retaining assembly 52 in correspondence of the receiving seat 54. In this way, the gripping device 32 can be detected directly along the approaching path to the adjustment station 5, without requiring deviations from this path.

The aforementioned sensor element 550 is preferably of the laser type, in particular a direct diffuse photocell, provided with a transmitting element and a receiving element, so as to detect the distance from the gripping device 32, so as to verify the correct arrangement of the gripping assembly 3. It may indeed happen that, following the handling operations, unexpected dynamic actions act on the gripping assembly 3, modifying its structure.

Moreover, the adjustment station 5 can usefully comprise at least one fixed centering tip 6, preferably three non-aligned centering tips 6, adapted to allow the abutment with at least one corresponding abutment element, not shown for simplicity, on the gripping assembly 3, to operate the initial setting, then the initial determination of the position and orientation of the gripping head 3 of the apparatus.

The method for automatically adjusting the handling apparatus for products is easily comprehensible from the above disclosure.

During the initial step of setting, upon switching on the apparatus 1, if detection means 45, 55, 550 are provided, it is possible to make a first reading of the positioning of the gripping device 32 or of the gripping devices 32 on the support structure 31 of the gripping assembly 3. In this case, the gripping assembly 3 is approached, in a determined position and according to a determined orientation, to the adjustment station 5, to carry out this reading, which is communicated to the control unit. This same unit processes the received data and verifies the need to adjust the position of the gripping devices 32 or to start a production cycle.

In any case, the control unit records or stores the initial positioning of the gripping devices 32 on the gripping assembly 3.

Subsequently, if it is necessary to adjust the position of the movable gripping devices 32, or after a first production cycle, the movable arm 2 is again approached, according to a motion controlled by the control unit, to the adjustment station 5.

The gripping assembly 3 is oriented and moved so as to insert a first gripping element 34 of a first gripping device 32, in correspondence of the receiving seat 54 of the retaining assembly 52. Subsequently, the inserted gripping device 32 is automatically brought into a condition unlocked by the locking means 37 upon actuation of the actuator member 39, so as to remove any obstacle to the free movement of the gripping device 32 along the respective adjustment guide 36. It is preferably the control unit of the apparatus that controls the activation or deactivation of the locking means 37.

The control unit processes the adjustment motion required for the specific gripping device 32, in the following production cycle, and activates accordingly the robotic arm 2. In practice, the control unit actuates the adjustment motion through the relative motion between the support structure 31, which in the case is movable, and the retaining assembly 52, which in the illustrated case is fixed.

After the adjustment, the gripping device 32 is brought back into the locked condition, thanks to the activation of the locking means 37 and disconnected from the receiving seat 54.

According to the same adjustment process, it is possible to adjust each additional gripping device 32 on the gripping assembly 3.

Finally, it is possible to start the scheduled production cycle for the correct handling of products from a first operating station to a second operating station.

The gripping assembly 3 is positioned in correspondence of the first operating station wherein there is a product to be picked up.

The at least one gripping device 32, positioned in the selected position along the respective adjustment guide 36, is actuated to intercept and retain the product to be moved.

A portion of the product is therefore locked by the abutment member 46, 460 arranged on the gripping assembly 3, to keep the same product retained in a desired configuration, in particular to reduce possible deformations.

Finally, the product retained by the gripping assembly 3 is moved towards the second operating station and released there by the same gripping device 32.

The apparatus, disclosed by way of example, is susceptible of several modifications and variations depending on the different requirements.

In particular, engaging, screwing or other elements may be provided for connecting or disconnecting automatically, according to the invention, each mobile gripping device from the respective adjustment guide.

In the practical embodiment of the invention, the materials used, as well as shape and dimensions, may be any according to requirements.

Where the technical features mentioned in any of the claims are followed by reference numerals, these reference numerals are included to improve the comprehension of the claims only, and consequently they have no limiting effect on the object of each element identified by way of example by these reference numerals.

## Claims

1. Handling apparatus for products, comprising a robotic arm (2) movable in a controlled manner to transfer at least one product at a time from a first operating station to a second operating station, a gripping assembly (3) carried by said robotic arm (2) and comprising at least one gripping device (32) which can be selectively positioned on said gripping assembly (3), suitable for gripping and retaining the aforementioned product in correspondence of a respective portion, said gripping assembly (3) comprising a support frame (31) bearing said at least one gripping device (32) and comprising at least one adjustment guide (36) along which said at least one gripping device (32) is selectably lockable, said gripping assembly (3) comprising locking means (37) that can be activated automatically upon command of a control unit associated with said apparatus, for locking and unlocking the selective positioning of said gripping device (32) along said adjustment guide (36), **characterized in that** said gripping assembly (3) comprises an abutment member (46, 460) suitable for blocking, by means of an abutment, a respective portion of said product to be handled, thus cooperating to pick up said product safely.

2. Apparatus according to claim 1, **characterized in that** said abutment member (46, 460) has an operating surface (47, 470) suitable to intercept said portion of said product to be handled.

3. Apparatus according to claim 2, **characterized in that** it comprises an auxiliary gripping device (330) cooperating with said abutment member (460) and able to be activated alternatively between an active configuration, retaining said portion of said product, and an inactive configuration of rest with respect to said retaining action.

4. Apparatus according to claim 3, **characterized in that** said auxiliary gripping device (330) comprises a first jaw (331) and a second jaw (331), arranged on opposite sides with respect to said operating surface (470), and movable between said closing active configuration, in correspondence of which said first jaw (331) and said second jaw (332) are mutually approaching, and said opening inactive configuration, in correspondence of which said first jaw (331) and said second jaw (332) are mutually moved away.

5. Apparatus according to claim 3 or 4, **characterized in that** said operating surface (470) comprises respective notches (471) shaped to allow the passage of said auxiliary gripping device (330) from said inactive configuration to said active configuration, for retaining said product on said operating surface (47, 470).

6. Apparatus according to one of the preceding claims, **characterized in that** it comprises at least one pair of said adjustment guides (36) for respective said gripping devices (32), arranged according to incident directions, said abutment member (46, 460) being arranged in correspondence of the vertex of said incident directions.

7. Apparatus according to one of the preceding claims, **characterized in that** said locking means (37) comprise a connecting element (38) to said adjustment guide (36), which can be actuated between an active locking configuration, connecting to said adjustment guide (36), and an unlocking configuration, in correspondence of which said connecting element (38) is disconnected from the same adjustment guide (36), allowing said gripping device (32) to be moved along the same adjustment guide (36).

8. Apparatus according to claim 7, **characterized in that** said locking means (37) comprise a connecting element (38) pluggable to said adjustment guide (36), said adjustment guide (36) comprising a succession of seats (41), each being suitable to receive and lock one said pluggable connecting element (38).

9. Apparatus according to any one of claims 4 to 7, **characterized in that** said locking means (37) comprise elastic contrast means (42) acting on said connecting element (38) to contrast the disconnection from or, alternatively, the connection of the connecting element (38) to said adjustment guide (36) in a selected adjustment position.

10. Apparatus according to one of the preceding claims, **characterized in that** it comprises at least one detecting body (45) integral with said gripping device (32) and detecting means (55, 550) integral with a spatial reference system external to said movable gripping device (32), to allow detection of the instantaneous position of said gripping device (32) with respect to said external spatial reference system.

11. Apparatus according to claim 1, **characterized in that** said abutment member (46, 460) can be magnetically activated to attract one said abutted portion of said product.

12. Apparatus according to one of the preceding claims, **characterized in that** it is associated with an adjustment station (5) comprising a retaining assembly (52) configured to receive and intercept a respective gripping device (32) carried by said apparatus, so as to block it, referring it safely to a spatial reference system represented by said same retaining assembly (52), said retaining assembly (52) comprising a reference member (53) shaping a fork-shaped receiving seat (54), inside of which said gripping device (32) is adapted to be inserted and locked between opposing walls of said fork-shaped receiving seat (53), thus ensuring said safe reference.

13. Apparatus according to claim 12, **characterized in that** it comprises a sensor element (550) applied to said retaining assembly (52) in correspondence of said receiving seat (54), to detect instantaneously the distance from said gripping device (32).

14. Apparatus according to claim 13, **characterized in that** said sensor means (550) is a direct diffuse photocell.

15. Apparatus according to any one of claims 12 to 14, **characterized in that** said locking means (37) are activated by means of an actuator member (39) which can be associated therewith, upon command of said control unit, carried by said gripping device (32) or, alternatively, by said adjustment station (5), acting on said gripping device (32), to automatically unlock it or lock it to said adjustment guide (36), when said gripping device (32) is retained by said retaining assembly (52).

16. Method for the automatic adjustment of a handling apparatus for products, comprising the steps of:
a. providing an apparatus (1) comprising a robotic arm (2) and a gripping assembly (3) carried by said robotic arm (2), said gripping assembly (3) comprising a support structure (31) comprising at least one adjustment guide (36), at least one movable gripping device (32) along said adjustment guide (36) to be locked in a selected position, for handling said product, and an abutment member (46, 460) suitable for blocking, by means of an abutment, a respective portion of said product to be handled, thus cooperating to pick up said product safely;
b. providing an adjustment station (5) comprising a retaining assembly (52) configured to receive and intercept said gripping device (32) in correspondence of a fork-shaped receiving seat (54), so as to lock it between opposite walls of said fork-shaped receiving seat (54), referring it with respect to a spatial reference system represented by said same retaining assembly (52);
c. actuating said robotic arm (2) according to a controlled approaching motion to said adjustment station (5), until said retaining assembly (52) intercepts and locks said gripping device (32);
d. actuating locking means (37) carried by said gripping device (32), by means of an associated control unit, for disconnecting or unlocking said gripping device (32) from said adjustment guide (36);
e. actuating said robotic arm (2), realizing an adjusting motion of the positioning of said gripping device (32), by means of a relative motion between said gripping device (32), intercepted and locked by said retaining assembly (52) and said adjustment guide (36) brought into motion by said robotic arm (2);
f. stopping said adjustment motion when said gripping device (32) reaches a new selected position along said adjustment guide (36), for handling said additional product;
g. locking said gripping device (32) in said desired position by activating said locking means (37);
h. moving said gripping device (32) away from said retaining assembly (52) and starting a new handling production cycle.

17. Method for automatically handling of products, comprising the steps of:
a. providing an apparatus (1) comprising a robotic arm (2) and a gripping assembly (3) carried by said robotic arm (2), said gripping assembly (3) comprising a support structure (31) comprising at least one adjustment guide (36), and at least one movable gripping device (32) along said adjustment guide (36) to be locked in a selected position, for handling said product;
b. positioning said gripping assembly (3) in correspondence of a first operating station wherein there is one said product to be picked up,
c. actuating said gripping device (32) positioned in said selected position along said adjustment guide (36), to intercept and retain said product;
d. blocking a portion of said product by means of an abutment member (46, 460) arranged on said gripping assembly (3), to keep said product retained in a desired configuration;
e. moving said product being retained by said gripping assembly (3) towards a second operating station;
f. actuating said gripping device (32) for releasing said product in correspondence of said second operating station.

## Patentansprüche

1. Handhabungseinrichtung für Produkte, die einen Roboterarm (2), der in einer gesteuerten Weise bewegbar ist, umfasst, um mindestens ein Produkt auf einmal von einer ersten Betriebsstation zu einer zweiten Betriebsstation zu transferieren, eine Greifanordnung (3), die von dem Roboterarm (2) getragen wird und mindestens eine Greifvorrichtung (32) umfasst, die selektiv auf der Greifanordnung (3) positioniert werden kann, die dazu geeignet ist, das oben erwähnte Produkt in Entsprechung mit einem jeweiligen Abschnitt zu ergreifen und zu halten, wobei die Greifanordnung (3) einen Tragrahmen (31) umfasst, der die mindestens eine Greifvorrichtung (32) trägt und mindestens eine Einstellführung (36) umfasst, entlang der die mindestens eine Greifvorrichtung (32) selektiv verriegelbar ist, wobei die Greifanordnung (3) ein Verriegelungsmittel (37) umfasst, das automatisch auf Befehl einer Steuereinheit, die mit der Vorrichtung assoziiert ist, aktiviert werden kann, um die selektive Positionierung der Greifvorrichtung (32) entlang der Einstellführung (36) zu verriegeln und zu entriegeln, **dadurch gekennzeichnet, dass** die Greifanordnung (3) ein Anschlagelement (46, 460) umfasst, das dazu geeignet ist, mittels eines Anschlags einen jeweiligen Abschnitt des zu handhabenden Produkts zu blockieren, um somit zusammenzuwirken, um das Produkt sicher aufzunehmen.

2. Einrichtung nach Anspruch 1, **dadurch gekennzeichnet, dass** das Anschlagelement (46, 460) eine Bedienoberfläche (47, 470) aufweist, die dazu geeignet ist, den Abschnitt des zu handhabenden Produkts abzufangen.

3. Einrichtung nach Anspruch 2, **dadurch gekennzeichnet, dass** sie eine Hilfsgreifvorrichtung (330) umfasst, die mit dem Anschlagelement (460) zusammenwirkt und in der Lage ist, alternativ zwischen einer aktiven Konfiguration, die den Abschnitt des Produkts hält, und einer inaktiven Ruhekonfiguration in Bezug auf die Haltewirkung aktiviert zu werden.

4. Einrichtung nach Anspruch 3, **dadurch gekennzeichnet, dass** die Hilfsgreifvorrichtung (330) eine erste Klemmbacke (331) und eine zweite Klemmbacke (331) umfasst, die auf entgegengesetzten Seiten in Bezug auf die Bedienoberfläche (470) eingerichtet sind und zwischen der aktiven Schließkonfiguration, in deren Entsprechung sich die erste Klemmbacke (331) und die zweite Klemmbacke (332) einander nähern, und der inaktiven Öffnungskonfiguration, in deren Entsprechung die erste Klemmbacke (331) und die zweite Klemmbacke (332) voneinander weg bewegt werden, bewegbar sind.

5. Einrichtung nach Anspruch 3 oder 4, **dadurch gekennzeichnet, dass** die Bedienoberfläche (470) jeweilige Kerben (471) umfasst, die geformt sind, um den Übergang der Hilfsgreifvorrichtung (330) von der inaktiven Konfiguration zu der aktiven Konfiguration zu erlauben, um das Produkt auf der Bedienoberfläche (47, 470) zu halten.

6. Einrichtung nach einem der vorstehenden Ansprüche, **dadurch gekennzeichnet, dass** sie mindestens ein Paar der Einstellführungen (36) für die jeweiligen Greifvorrichtungen (32) umfasst, die gemäß Einfallsrichtungen angeordnet sind, wobei das Anschlagelement (46, 460) in Entsprechung mit dem Scheitelpunkt der Einfallsrichtungen eingerichtet ist.

7. Einrichtung nach einem der vorstehenden Ansprüche, **dadurch gekennzeichnet, dass** die Verriegelungsmittel (37) ein Verbindungselement (38) zu der Einstellführung (36) umfassen, das zwischen einer aktiven Verriegelungskonfiguration, die mit der Einstellführung (36) verbindet, und einer Entriegelungskonfiguration betätigt werden kann, in deren Entsprechung das Verbindungselement (38) von derselben Einstellführung (36) getrennt wird, wodurch es der Greifvorrichtung (32) erlaubt wird, entlang derselben Einstellführung (36) bewegt zu werden.

8. Einrichtung nach Anspruch 7, **dadurch gekennzeichnet, dass** die Verriegelungsmittel (37) ein Verbindungselement (38) umfassen, das an die Einstellführung (36) ansteckbar ist, wobei die Einstellführung (36) eine Folge von Sitzen (41) umfasst, die jeweils dazu geeignet sind, ein ansteckbares Verbindungselement (38) aufzunehmen und zu verriegeln.

9. Einrichtung nach einem der Ansprüche 4 bis 7, **dadurch gekennzeichnet, dass** die Verriegelungsmittel (37) elastische Kontrastmittel (42) umfassen, die auf das Verbindungselement (38) einwirken, um die Trennung von oder alternativ die Verbindung des Verbindungselements (38) mit der Einstellführung (36) in einer ausgewählten Einstellposition zu unterscheiden.

10. Einrichtung nach einem der vorstehenden Ansprüche, **dadurch gekennzeichnet, dass** sie mindestens einen Erfassungskörper (45), der einstückig mit der Greifvorrichtung (32) ausgebildet ist, und Erfassungsmittel (55, 550), die einstückig mit einem räumlichen Bezugssystem außerhalb der bewegbaren Greifvorrichtung (32) ausgebildet sind, umfasst, um die Erfassung der momentanen Position der Greifvorrichtung (32) in Bezug auf das äußere räumliche Bezugssystem zu erlauben.

11. Einrichtung nach Anspruch 1, **dadurch gekennzeichnet, dass** das Anschlagelement (46, 460) magnetisch aktiviert werden kann, um einen Abschnitt im Anschlag des Produkts anzuziehen.

12. Einrichtung nach einem der vorstehenden Ansprüche, **dadurch gekennzeichnet, dass** sie mit einer Einstellstation (5) assoziiert ist, die eine Halteanordnung (52) umfasst, die ausgelegt ist, um eine jeweilige Greifvorrichtung (32), die von der Einrichtung getragen wird, aufzunehmen und abzufangen, um sie zu blockieren, wobei sie sie sicher auf ein räumliches Bezugssystem bezieht, das von derselben Halteanordnung (52) dargestellt wird, wobei die Halteanordnung (52) ein Bezugselement (53) umfasst, das einen gabelförmigen Aufnahmesitz (54) formt, in den die Greifvorrichtung (32) eingesetzt und zwischen entgegengesetzten Wänden des gabelförmigen Aufnahmesitzes (53) verriegelt werden kann, um derart die sichere Bezugnahme sicherzustellen.

13. Einrichtung nach Anspruch 12, **dadurch gekennzeichnet, dass** sie ein Sensorelement (550) umfasst, das an der Halteanordnung (52) in Entsprechung mit dem Aufnahmesitz (54) angewandt wird, um den Abstand von der Greifvorrichtung (32) augenblicklich zu erfassen.

14. Einrichtung nach Anspruch 13, **dadurch gekennzeichnet, dass** das Sensormittel (550) eine direkte diffuse Fotozelle ist.

15. Einrichtung nach einem der Ansprüche 12 bis 14, **dadurch gekennzeichnet, dass** die Verriegelungsmittel (37) mittels eines Aktuatorelements (39) aktiviert werden, das mit ihnen auf Befehl der Steuereinheit assoziiert werden kann, das von der Greifvorrichtung (32) oder alternativ von der Einstellstation (5) getragen wird, das auf die Greifvorrichtung (32) einwirkt, um sie automatisch zu entriegeln oder mit der Einstellführung (36) zu verriegeln, wenn die Greifvorrichtung (32) von der Halteanordnung (52) gehalten wird.

16. Verfahren zur automatischen Einstellung einer Handhabungsvorrichtung für Produkte, das die folgenden Schritte umfasst:
a. Bereitstellen einer Einrichtung (1), die einen Roboterarm (2) und eine Greifanordnung (3) umfasst, die von dem Roboterarm (2) getragen wird, wobei die Greifanordnung (3) eine Tragstruktur (31) umfasst, die mindestens eine Einstellführung (36), mindestens eine bewegbare Greifvorrichtung (32) entlang der Einstellführung (36), die in einer ausgewählten Position verriegelt werden soll, um das Produkt zu handhaben, und ein Anschlagelement (46, 460) umfasst, das dazu geeignet ist, mittels eines Anschlags einen jeweiligen Abschnitt des zu handhabenden Produkts zu blockieren, um somit zusammenzuwirken, um das Produkt sicher aufzunehmen;
b. Bereitstellen einer Einstellstation (5), die eine Halteanordnung (52) umfasst, die konfiguriert ist, um die Greifvorrichtung (32) in Entsprechung mit einem gabelförmigen Aufnahmesitz (54) aufzunehmen und abzufangen, um sie zwischen entgegengesetzten Wänden des gabelförmigen Aufnahmesitzes (54) zu verriegeln, wobei sie sie auf ein räumliches Bezugssystem bezieht, das von derselben Halteanordnung (52) dargestellt ist;
c. Betätigen des Roboterarms (2) gemäß einer gesteuerten Annäherungsbewegung zu der Einstellstation (5), bis die Halteanordnung (52) die Greifvorrichtung (32) abfängt und verriegelt;
d. Betätigen von Verriegelungsmitteln (37), die von der Greifvorrichtung (32) getragen werden, mittels einer assoziierten Steuereinheit, um die Greifvorrichtung (32) von der Einstellführung (36) zu trennen oder zu entriegeln;
e. Betätigen des Roboterarms (2), Realisieren einer Einstellbewegung der Positionierung der Greifvorrichtung (32) mittels einer Relativbewegung zwischen der Greifvorrichtung (32), die von der Halteanordnung (52) und der Einstellführung (36) abgefangen und verriegelt wird, die von dem Roboterarm (2) in Bewegung gebracht wird;
f. Stoppen der Einstellbewegung, wenn die Greifvorrichtung (32) eine neue ausgewählte Position entlang der Einstellführung (36) erreicht, um das zusätzliche Produkt zu handhaben;
g. Verriegeln der Greifvorrichtung (32) in der gewünschten Position durch Aktivieren der Verriegelungsmittel (37);
h. Bewegen der Greifvorrichtung (32) von der Halteanordnung (52) weg und Starten eines neuen Handhabungs-Produktionszyklus.

17. Verfahren zum automatischen Handhaben von Produkten, das die Schritte umfasst des:
a. Bereitstellens einer Vorrichtung (1), die einen Roboterarm (2) und eine Greifanordnung (3) umfasst, die von dem Roboterarm (2) getragen wird, wobei die Greifanordnung (3) eine Tragstruktur (31) umfasst, die mindestens eine Einstellführung (36) und mindestens eine bewegbare Greifvorrichtung (32) entlang der Einstellführung (36) umfasst, um in einer ausgewählten Position verriegelt zu werden, um das Produkt zu handhaben;
b. Positionierens der Greifanordnung (3) in Entsprechung mit einer ersten Betriebsstation, in der sich ein Produkt, das aufgenommen werden soll, befindet,
c. Betätigens der Greifvorrichtung (32), die in der ausgewählten Position entlang der Einstellführung (36) positioniert ist, um das Produkt abzufangen und zu halten;
d. Blockierens eines Abschnitts des Produkts mittels eines Anschlagelements (46, 460), das auf der Greifanordnung (3) angeordnet ist, um das Produkt in einer gewünschten Konfiguration zu halten;
e. Bewegens des Produkts, das von der Greifanordnung (3) gehalten wird, zu einer zweiten Betriebsstation;
f. Betätigens der Greifvorrichtung (32) zum Freigeben des Produkts in Entsprechung mit der zweiten Betriebsstation.

## Revendications

1. Appareil de manipulation de produits, comprenant un bras robotisé (2) mobile de manière contrôlée pour transférer au moins un produit à la fois d'un premier poste de commande à un second poste de commande, un ensemble de préhension (3) porté par ledit bras robotisé (2) et comprenant au moins un dispositif de préhension (32) qui peut être positionné de manière sélective sur ledit ensemble de préhension (3), apte à saisir et retenir le produit susmentionné en correspondance avec une partie respective, ledit ensemble de préhension (3) comprenant un cadre de support (31) portant ledit au moins un dispositif de préhension (32) et comprenant au moins un guide de réglage (36) le long duquel ledit au moins un dispositif de préhension (32) peut être verrouillé de manière sélective, ledit ensemble de préhension (3) comprenant des moyens de verrouillage (37) qui peuvent être activés automatiquement sur commande d'une unité de contrôle associée audit appareil, pour verrouiller et déverrouiller le positionnement sélectif dudit dispositif de préhension (32) le long dudit guide de réglage (36), **caractérisé en ce que** ledit ensemble de préhension (3) comprend un élément de butée (46, 460) apte à bloquer, au moyen d'une butée, une partie respective dudit produit à manipuler, coopérant ainsi afin de prélever ledit produit en toute sécurité.

2. Appareil selon la revendication 1, **caractérisé en ce que** ledit élément de butée (46, 460) a une surface opérationnelle (47, 470) apte à intercepter ladite partie dudit produit à manipuler.

3. Appareil selon la revendication 2, **caractérisé en ce qu'il** comprend un dispositif de préhension auxiliaire (330) coopérant avec ledit élément de butée (460) et pouvant être activé alternativement entre une configuration active, retenant ladite partie dudit produit, et une configuration inactive de repos par rapport à ladite action de retenue.

4. Appareil selon la revendication 3, **caractérisé en ce que** ledit dispositif de préhension auxiliaire (330) comprend une première mâchoire (331) et une seconde mâchoire (331), agencées sur des côtés opposés par rapport à ladite surface opérationnelle (470), et mobiles entre ladite configuration active de fermeture, où ladite première mâchoire (331) et ladite seconde mâchoire (332) se rapprochent mutuellement, et ladite configuration inactive d'ouverture, où ladite première mâchoire (331) et ladite seconde mâchoire (332) sont mutuellement éloignées l'une de l'autre.

5. Appareil selon la revendication 3 ou 4, **caractérisé en ce que** ladite surface opérationnelle (470) comprend des encoches respectives (471) conformées pour permettre le passage dudit dispositif de préhension auxiliaire (330) de ladite configuration inactive à ladite configuration active, pour retenir ledit produit sur ladite surface opérationnelle (47, 470).

6. Appareil selon l'une des revendications précédentes, **caractérisé en ce qu'il** comprend au moins une paire desdits guides de réglage (36) pour lesdits dispositifs de préhension respectifs (32), agencés selon des directions d'incidence, ledit élément de butée (46, 460) étant agencé en correspondance avec le sommet desdites directions d'incidence.

7. Appareil selon l'une des revendications précédentes, **caractérisé en ce que** lesdits moyens de verrouillage (37) comprennent un élément de connexion (38) audit guide de réglage (36), qui peut être actionné entre une configuration de verrouillage actif, se connectant audit guide de réglage (36), et une configuration de déverrouillage, où ledit élément de connexion (38) est déconnecté du même guide de réglage (36), permettant audit dispositif de préhension (32) d'être déplacé le long du même guide de réglage (36).

8. Appareil selon la revendication 7, **caractérisé en ce que** lesdits moyens de verrouillage (37) comprennent un élément de connexion (38) enfichable sur ledit guide de réglage (36), ledit guide de réglage (36) comprenant une succession de sièges (41), chacun étant apte à recevoir et verrouiller ledit élément de connexion enfichable (38).

9. Appareil selon l'une quelconque des revendications 4 à 7, **caractérisé en ce que** lesdits moyens de verrouillage (37) comprennent des moyens de contraste élastiques (42) agissant sur ledit élément de connexion (38) pour contraster la déconnexion ou, alternativement, la connexion de l'élément de connexion (38) audit guide de réglage (36) dans une position de réglage sélectionnée.

10. Appareil selon l'une des revendications précédentes, **caractérisé en ce qu'il** comprend au moins un corps de détection (45) solidaire dudit dispositif de préhension (32) et des moyens de détection (55, 550) solidaires d'un système de référence spatiale externe audit dispositif de préhension mobile (32), pour permettre la détection de la position instantanée dudit dispositif de préhension (32) par rapport audit système de référence spatiale externe.

11. Appareil selon la revendication 1, **caractérisé en ce que** ledit élément de butée (46, 460) peut être activé de façon magnétique pour attirer ladite partie en butée dudit produit.

12. Appareil selon l'une des revendications précédentes, **caractérisé en ce qu'il** est associé à un poste de réglage (5) comprenant un ensemble de retenue (52) configuré pour recevoir et intercepter un dispositif de préhension respectif (32) porté par ledit appareil, de manière à le bloquer, en le reportant en toute sécurité à un système de référence spatiale représenté par ledit même ensemble de retenue (52), ledit ensemble de retenue (52) comprenant un élément de référence (53) formant un siège de réception en forme de fourche (54), à l'intérieur duquel ledit dispositif de préhension (32) est adapté pour être inséré et verrouillé entre des parois opposées dudit siège de réception en forme de fourche (53), assurant ainsi ladite référence de sécurité.

13. Appareil selon la revendication 12, **caractérisé en ce qu'il** comprend un élément capteur (550) appliqué audit ensemble de retenue (52) en correspondance avec ledit siège de réception (54), pour détecter instantanément la distance depuis ledit dispositif de préhension (32).

14. Appareil selon la revendication 13, **caractérisé en ce que** lesdits capteurs (550) sont une cellule photoélectrique de diffusion immédiate.

15. Appareil selon l'une quelconque des revendications 12 à 14, **caractérisé en ce que** lesdits moyens de verrouillage (37) sont activés au moyen d'un élément d'actionnement (39) qui peut être associé à ceux-ci, sur commande de ladite unité de contrôle, portée par ledit dispositif de préhension (32) ou, alternativement, par ledit poste de réglage (5), agissant sur ledit dispositif de préhension (32), pour le déverrouiller ou le verrouiller automatiquement audit guide de réglage (36), lorsque ledit dispositif de préhension (32) est retenu par ledit ensemble de retenue (52).

16. Méthode pour le réglage automatique d'un appareil de manipulation de produits, comprenant les étapes consistant à :
a. fournir un appareil (1) comprenant un bras robotisé (2) et un ensemble de préhension (3) porté par ledit bras robotisé (2), ledit ensemble de préhension (3) comprenant une structure de support (31) comprenant au moins un guide de réglage (36), au moins un dispositif de préhension mobile (32) le long dudit guide de réglage (36) devant être verrouillé dans une position sélectionnée, pour manipuler ledit produit, et un élément de butée (46, 460) apte à bloquer, au moyen d'une butée, une partie respective dudit produit à manipuler, coopérant ainsi afin de prélever ledit produit en toute sécurité ;
b. fournir un poste de réglage (5) comprenant un ensemble de retenue (52) configuré pour recevoir et intercepter ledit dispositif de préhension (32) en correspondance avec un siège de réception en forme de fourche (54), de manière à le verrouiller entre des parois opposées dudit siège de réception en forme de fourche (54), en le reportant par rapport à un système de référence spatiale représenté par ledit même ensemble de retenue (52) ;
c. actionner ledit bras robotisé (2) selon un mouvement d'approche contrôlé dudit poste de réglage (5), jusqu'à ce que ledit ensemble de retenue (52) intercepte et verrouille ledit dispositif de préhension (32) ;
d. actionner les moyens de verrouillage (37) portés par ledit dispositif de préhension (32), au moyen d'une unité de contrôle associée, pour déconnecter ou déverrouiller ledit dispositif de préhension (32) dudit guide de réglage (36) ;
e. actionner ledit bras robotisé (2), réalisant un mouvement de réglage du positionnement dudit dispositif de préhension (32), au moyen d'un mouvement relatif entre ledit dispositif de préhension (32), intercepté et verrouillé par ledit ensemble de retenue (52) et ledit guide de réglage (36) entraîné dans un mouvement par ledit bras robotisé (2) ;
f. arrêter ledit mouvement de réglage lorsque ledit dispositif de préhension (32) atteint une nouvelle position sélectionnée le long dudit guide de réglage (36), pour manipuler ledit produit supplémentaire ;
g. verrouiller ledit dispositif de préhension (32) dans ladite position souhaitée en activant lesdits moyens de verrouillage (37) ;
h. éloigner ledit dispositif de préhension (32) dudit ensemble de retenue (52) et lancer un nouveau cycle de production de manipulation.

17. Méthode pour la manipulation automatique de produits, comprenant les étapes consistant à :
a. fournir un appareil (1) comprenant un bras robotisé (2) et un ensemble de préhension (3) porté par ledit bras robotisé (2), ledit ensemble de préhension (3) comprenant une structure de support (31) comprenant au moins un guide de réglage (36), et au moins un dispositif de préhension mobile (32) le long dudit guide de réglage (36) devant être verrouillé dans une position sélectionnée, afin de manipuler ledit produit ;
b. positionner ledit ensemble de préhension (3) en correspondance avec un premier poste de commande dans lequel se trouve un desdits produits à prélever,
c. actionner ledit dispositif de préhension (32) positionné dans ladite position sélectionnée le long dudit guide de réglage (36), pour intercepter et retenir ledit produit ;
d. bloquer une partie dudit produit au moyen d'un élément de butée (46, 460) disposé sur ledit ensemble de préhension (3), pour maintenir ledit produit retenu dans une configuration souhaitée ;
e. déplacer ledit produit retenu par ledit ensemble de préhension (3) vers un second poste de commande ;
f. actionner ledit dispositif de préhension (32) pour libérer ledit produit en correspondance avec ledit second poste de commande.
